# EUROPEAN PATENT APPLICATION

(11) **EP 4 848 840 A1**
(43) Date of publication of application: **02.12.2026**
(21) Application number: 25757623.1
(22) Date of filing: 08.02.2025
(51) Int. Cl.: H04W 56/00

(54) **NON-TERRESTRIAL NETWORK COMMUNICATION METHOD AND COMMUNICATION APPARATUS**

(30) Priority: 22.02.2024 CN 202410199351
(71) Applicant: HUAWEI TECHNOLOGIES CO., LTD., Shenzhen, Guangdong 518129 (CN)
(72) Inventor: LI, Kexin, Shenzhen, Guangdong 518129 (CN); YU, Tianhang, Shenzhen, Guangdong 518129 (CN); KONG, Chuili, Shenzhen, Guangdong 518129 (CN); LUO, Hejia, Shenzhen, Guangdong 518129 (CN); WANG, Jun, Shenzhen, Guangdong 518129 (CN); MA, Jianglei, Shenzhen, Guangdong 518129 (CN)
(74) Representative: Goddar, Heinz J.
(86) International application number: PCT/CN2025/076519
(87) International publication number: WO 2025/176026

(57) **Abstract**

This application provides a communication method and a communication apparatus. In the method, a terminal device receives first information from a first network device, where the first information indicates an RE in a first time-frequency resource, the first time-frequency resource is a rate matching resource for a first reference signal, and the first reference signal includes at least one of the following: a DMRS, a CSI-RS, an SRS, a PTRS, a PRS, a TRS, or a CRS. Further, the terminal device performs rate matching based on the first time-frequency resource. According to this solution, the first network device may indicate the rate matching resource at an RE granularity to the terminal device. Compared with indicating a rate matching resource at an RB granularity, indicating the rate matching resource at the RE granularity can reduce resource waste and improve resource utilization. In addition, the first reference signal may include a plurality of different reference signals. Therefore, the solution is applicable to the plurality of reference signals and thus provides wider application scenarios.

## Description

This application claims priority to Chinese Patent Application No. 202410199351.3, filed with the China National Intellectual Property Administration on February 22, 2024 and entitled "NON-TERRESTRIAL NETWORK COMMUNICATION METHOD AND COMMUNICATION APPARATUS", which is incorporated herein by reference in its entirety.

### TECHNICAL FIELD

Embodiments of this application relate to the communication field, and more specifically, to a non-terrestrial network communication method and a communication apparatus.

### BACKGROUND

With the continuous development of satellite communication, satellite systems are gradually evolving from single-satellite transmission to multi-satellite coordinated transmission. Using multi-satellite coordinated transmission can reduce the performance requirements on individual satellites, thereby reducing single-satellite manufacturing costs.

In multi-satellite coordinated transmission, how to reduce resource waste and improve resource utilization is crucial to the efficiency of multi-satellite coordinated transmission.

### SUMMARY

This application provides a non-terrestrial network communication method, enabling indication of a rate matching resource at a resource element (resource element, RE) granularity for any reference signal. This improves resource utilization and provides wider application scenarios.

According to a first aspect, a non-terrestrial network communication method is provided. The method may be performed by a terminal device, or may be performed by a component (for example, a chip, a circuit, or a chip system) in the terminal device. For ease of understanding, the following uses an example in which the terminal device performs the method for description.

The method includes: receiving first information from a first network device, where the first information indicates an RE in a first time-frequency resource, and the first time-frequency resource is a rate matching resource for a first reference signal; and performing rate matching based on the first time-frequency resource.

According to the foregoing technical solution, the first network device may indicate the rate matching resource at an RE granularity to the terminal device. Compared with indicating a rate matching resource at an RB granularity, indicating the rate matching resource at the RE granularity can reduce resource waste and improve resource utilization.

The first reference signal includes any one of the following: a demodulation reference signal (demodulation reference signal, DMRS), a channel state information reference symbol (channel state information reference signal, CSI-RS), a sounding reference signal (sounding reference signal, SRS), a phase tracking reference signal (phase tracking reference signal, PTRS), a positioning reference signal (positioning reference signal, PRS), a tracking reference signal (tracking reference signal, TRS), a cell-specific reference signal (cell-specific reference signal, CRS), or the like.

In this application, the first reference signal may include a plurality of different reference signals. Therefore, the solution is applicable to the plurality of reference signals, and thus provides wider application scenarios.

With reference to the first aspect, in some implementations of the first aspect, the method further includes sending second information to the first network device, where the second information is for determining a delay difference and a frequency shift difference between the first network device and a second network device, and the delay difference and the frequency shift difference are for determining the first time-frequency resource.

In this application, the first network device and the second network device provide a service for the terminal device on a same time-frequency resource.

According to the foregoing solution, the terminal device may indicate the delay difference and the frequency shift difference between the first network device and the second network device, so that the network device determines an appropriate rate matching resource, thereby reducing interference and improving communication efficiency.

Optionally, the second information includes any one of the following: the delay difference and the frequency shift difference; a position of the terminal device; or a motion trajectory of the terminal device.

According to the foregoing solution, the terminal device may send the delay difference and the frequency shift difference to the first network device, or may send the position of the terminal device or the motion trajectory of the terminal device to the first network device, so that the first network device can determine the delay difference and the frequency shift difference.

Optionally, the first information includes time domain information and frequency domain information, the time domain information indicates a symbol in the first time-frequency resource, and the frequency domain information indicates a subcarrier in the first time-frequency resource.

For example, the time domain information includes: an offset between a start symbol in the first time-frequency resource and a start symbol in a second time-frequency resource, and a delta between a quantity of symbols in the first time-frequency resource and a quantity of symbols in the second time-frequency resource; an offset between a start symbol in the first time-frequency resource and a start symbol in a second time-frequency resource, and an offset between an end symbol in the first time-frequency resource and an end symbol in the second time-frequency resource; or a first bitmap, where the first bitmap indicates the symbol in the first time-frequency resource, where the second time-frequency resource is used to receive the first reference signal from the second network device.

For example, the frequency domain information includes: an offset between a start subcarrier in the first time-frequency resource and a start subcarrier in the second time-frequency resource, and a delta between a quantity of subcarriers in the first time-frequency resource and a quantity of subcarriers in the second time-frequency resource; an offset between a start subcarrier in the first time-frequency resource and a start subcarrier in the second time-frequency resource, and an offset between an end subcarrier in the first time-frequency resource and an end subcarrier in the second time-frequency resource; or a second bitmap, where the second bitmap indicates the subcarrier in the first time-frequency resource, where the second time-frequency resource is used to receive the first reference signal from the second network device.

With reference to the first aspect, in some implementations of the first aspect, the method further includes: receiving resource information from the second network device, where the resource information indicates the second time-frequency resource; and determining the first time-frequency resource based on the second time-frequency resource and the first information.

According to the foregoing solution, the second network device may indicate, to the terminal device, a resource occupied by the first reference signal that is sent by the second network device, so that the terminal device determines the rate matching resource, thereby reducing interference and improving communication efficiency.

Optionally, receiving the resource information from the second network device includes receiving resource set information from the second network device, where the resource set information indicates time-frequency resources occupied by the first reference signal in N time periods, and the resource set information includes the resource information; and receiving the first information includes receiving N pieces of first information. The N time periods are in one-to-one correspondence with the N pieces of first information.

According to the foregoing solution, the first network device may configure rate matching resources in the N time periods for the terminal device. In this way, frequent configuration can be avoided, and signaling overheads of communication can be reduced.

According to a second aspect, a non-terrestrial network communication method is provided. The method may be performed by a first network device, or may be performed by a component (for example, a chip, a circuit, or a chip system) in the first network device. For ease of understanding, the following uses an example in which the first network device performs the method for description.

The method includes: determining first information, where the first information indicates an RE in a first time-frequency resource, and the first time-frequency resource is a rate matching resource for a first reference signal; and sending the first information to a terminal device.

According to the foregoing technical solution, the first network device may indicate the rate matching resource at an RE granularity to the terminal device. Compared with indicating a rate matching resource at an RB granularity, indicating the rate matching resource at the RE granularity can reduce resource waste and improve resource utilization.

The first reference signal includes at least one of the following: a DMRS, a CSI-RS, an SRS, a PTRS, a PRS, a TRS, or a CRS.

In this application, the first reference signal may include a plurality of different reference signals. Therefore, the solution is applicable to the plurality of reference signals, and thus provides wider application scenarios.

With reference to the second aspect, in some implementations of the second aspect, the method further includes: receiving second information from the terminal device, where the second information is for determining a delay difference and a frequency shift difference between the first network device and a second network device; and determining the first time-frequency resource based on the delay difference and the frequency shift difference.

According to the foregoing solution, the first network device may determine an appropriate rate matching resource for the terminal device based on the delay difference and the frequency shift difference between the first network device and the second network device, so that interference can be reduced, and communication efficiency can be improved.

Optionally, the second information includes any one of the following: the delay difference and the frequency shift difference; a position of the terminal device; or a motion trajectory of the terminal device.

Optionally, the first information includes time domain information and frequency domain information, the time domain information indicates a symbol in the first time-frequency resource, and the frequency domain information indicates a subcarrier in the first time-frequency resource.

For example, the time domain information includes: an offset between a start symbol in the first time-frequency resource and a start symbol in a second time-frequency resource, and a delta between a quantity of symbols in the first time-frequency resource and a quantity of symbols in the second time-frequency resource; an offset between a start symbol in the first time-frequency resource and a start symbol in a second time-frequency resource, and an offset between an end symbol in the first time-frequency resource and an end symbol in the second time-frequency resource; or a first bitmap, where the first bitmap indicates the symbol in the first time-frequency resource, where the second time-frequency resource is used by the second network device to send the first reference signal to the terminal device.

For example, the frequency domain information includes: an offset between a start subcarrier in the first time-frequency resource and a start subcarrier in the second time-frequency resource, and a delta between a quantity of subcarriers in the first time-frequency resource and a quantity of subcarriers in the second time-frequency resource; an offset between a start subcarrier in the first time-frequency resource and a start subcarrier in the second time-frequency resource, and an offset between an end subcarrier in the first time-frequency resource and an end subcarrier in the second time-frequency resource; or a second bitmap, where the second bitmap indicates the subcarrier in the first time-frequency resource, where
the second time-frequency resource is used by the second network device to send the first reference signal to the terminal device.

With reference to the second aspect, in some implementations of the second aspect, the method further includes: receiving resource information from the second network device, where the resource information indicates the second time-frequency resource; and determining the first time-frequency resource based on the second time-frequency resource.

According to the foregoing solution, the second network device may indicate, to the first network device, a resource occupied by the first reference signal that is sent by the second network device, so that the first network device determines the rate matching resource, thereby reducing interference and improving communication efficiency.

Optionally, receiving the resource information from the second network device includes receiving resource set information from the second network device, where the resource set information indicates time-frequency resources occupied by the first reference signal in N time periods, and the resource set information includes the resource information; and determining the first information includes determining N pieces of first information. The N time periods are in one-to-one correspondence with the N pieces of first information.

According to the foregoing solution, the second network device may indicate, to the first network device, the time-frequency resources occupied by the first reference signal in the N time periods, so that the first network device can configure rate matching resources in the N time periods for the terminal device. In this way, frequent configuration can be avoided, and signaling overheads of communication can be reduced.

According to a third aspect, this application provides a communication apparatus. The communication apparatus has a function of implementing the first aspect.

Specifically, the communication apparatus includes a transceiver unit and a processing unit. The transceiver unit is configured to receive first information from a first network device, where the first information indicates an RE in a first time-frequency resource, and the first time-frequency resource is a rate matching resource for a first reference signal; and the processing unit is configured to perform rate matching based on the first time-frequency resource.

The first reference signal includes at least one of the following: a DMRS, a CSI-RS, an SRS, a PTRS, a PRS, a TRS, or a CRS.

With reference to the third aspect, in some implementations of the third aspect, the transceiver unit is further configured to send second information to the first network device, where the second information is for determining a delay difference and a frequency shift difference between the first network device and a second network device, and the delay difference and the frequency shift difference are for determining the first time-frequency resource.

Optionally, the second information includes any one of the following: the delay difference and the frequency shift difference; a position of a terminal device; or a motion trajectory of a terminal device.

Optionally, the first information includes time domain information and frequency domain information, the time domain information indicates a symbol in the first time-frequency resource, and the frequency domain information indicates a subcarrier in the first time-frequency resource.

For example, the time domain information includes: an offset between a start symbol in the first time-frequency resource and a start symbol in a second time-frequency resource, and a delta between a quantity of symbols in the first time-frequency resource and a quantity of symbols in the second time-frequency resource; an offset between a start symbol in the first time-frequency resource and a start symbol in a second time-frequency resource, and an offset between an end symbol in the first time-frequency resource and an end symbol in the second time-frequency resource; or a first bitmap, where the first bitmap indicates the symbol in the first time-frequency resource, where the second time-frequency resource is used to receive the first reference signal from the second network device.

For example, the frequency domain information includes: an offset between a start subcarrier in the first time-frequency resource and a start subcarrier in the second time-frequency resource, and a delta between a quantity of subcarriers in the first time-frequency resource and a quantity of subcarriers in the second time-frequency resource; an offset between a start subcarrier in the first time-frequency resource and a start subcarrier in the second time-frequency resource, and an offset between an end subcarrier in the first time-frequency resource and an end subcarrier in the second time-frequency resource; or a second bitmap, where the second bitmap indicates the subcarrier in the first time-frequency resource, where the second time-frequency resource is used to receive the first reference signal from the second network device.

With reference to the third aspect, in some implementations of the third aspect, the transceiver unit is further configured to receive resource information from the second network device, where the resource information indicates the second time-frequency resource; and the processing unit is further configured to determine the first time-frequency resource based on the second time-frequency resource and the first information.

Optionally, the processing unit is specifically configured to receive resource set information from the second network device, where the resource set information indicates time-frequency resources occupied by the first reference signal in N time periods, and the resource set information includes the resource information; and the transceiver unit is specifically configured to receive N pieces of first information. The N time periods are in one-to-one correspondence with the N pieces of first information.

According to a fourth aspect, this application provides a communication apparatus. The communication apparatus has a function of implementing the second aspect.

Specifically, the communication apparatus includes a transceiver unit and a processing unit. The processing unit is configured to determine first information, where the first information indicates an RE in a first time-frequency resource, and the first time-frequency resource is a rate matching resource for a first reference signal; and the transceiver unit is configured to send the first information to a terminal device. The first reference signal includes at least one of the following: a DMRS, a CSI-RS, an SRS, a PTRS, a PRS, a TRS, or a CRS.

With reference to the fourth aspect, in some implementations of the fourth aspect, the transceiver unit is further configured to receive second information from the terminal device, where the second information is for determining a delay difference and a frequency shift difference between the first network device and a second network device; and the processing unit is further configured to determine the first time-frequency resource based on the delay difference and the frequency shift difference.

Optionally, the second information includes any one of the following: the delay difference and the frequency shift difference; a position of the terminal device; or a motion trajectory of the terminal device.

Optionally, the first information includes time domain information and frequency domain information, the time domain information indicates a symbol in the first time-frequency resource, and the frequency domain information indicates a subcarrier in the first time-frequency resource.

For example, the time domain information includes: an offset between a start symbol in the first time-frequency resource and a start symbol in a second time-frequency resource, and a delta between a quantity of symbols in the first time-frequency resource and a quantity of symbols in the second time-frequency resource; an offset between a start symbol in the first time-frequency resource and a start symbol in a second time-frequency resource, and an offset between an end symbol in the first time-frequency resource and an end symbol in the second time-frequency resource; or a first bitmap, where the first bitmap indicates the symbol in the first time-frequency resource, where the second time-frequency resource is used by the second network device to send the first reference signal to the terminal device.

For example, the frequency domain information includes: an offset between a start subcarrier in the first time-frequency resource and a start subcarrier in the second time-frequency resource, and a delta between a quantity of subcarriers in the first time-frequency resource and a quantity of subcarriers in the second time-frequency resource; an offset between a start subcarrier in the first time-frequency resource and a start subcarrier in the second time-frequency resource, and an offset between an end subcarrier in the first time-frequency resource and an end subcarrier in the second time-frequency resource; or a second bitmap, where the second bitmap indicates the subcarrier in the first time-frequency resource, where
the second time-frequency resource is used by the second network device to send the first reference signal to the terminal device.

With reference to the fourth aspect, in some implementations of the fourth aspect, the transceiver unit is further configured to receive resource information from the second network device, where the resource information indicates the second time-frequency resource; and the processing unit is further configured to determine the first time-frequency resource based on the second time-frequency resource.

Optionally, the transceiver unit is specifically configured to receive resource set information from the second network device, where the resource set information indicates time-frequency resources occupied by the first reference signal in N time periods, and the resource set information includes the resource information; and the processing unit is specifically configured to determine N pieces of first information. The N time periods are in one-to-one correspondence with the N pieces of first information.

According to a fifth aspect, this application provides a communication apparatus. The communication apparatus includes an interface circuit and one or more processors. The one or more processors are coupled to a memory. The memory is configured to store a computer program or instructions necessary for implementing a function in the first aspect or the second aspect. The one or more processors may execute the computer program or the instructions. When the computer program or the instructions are executed, the communication apparatus is enabled to implement the method in any possible design or implementation of the first aspect or the second aspect. The interface circuit is configured to implement a communication function in the communication apparatus and/or a communication function between the communication apparatus and another apparatus or component.

In a possible design, the processor is configured to communicate with the another apparatus or component through the interface circuit.

In a possible design, the communication apparatus may further include the memory.

According to a sixth aspect, this application provides a processor configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, this application provides a computer-readable storage medium. The computer-readable medium stores program code to be executed by a device, and the program code is configured to perform the method provided in any one of the foregoing aspects or the implementations of the foregoing aspects.

According to an eighth aspect, this application provides a computer program product including instructions. When the computer program product runs on a computer, the computer is enabled to perform the method provided in any one of the foregoing aspects or the implementations of the foregoing aspects.

According to a ninth aspect, this application provides a chip. The chip includes a processor and a communication interface. The processor reads, through the communication interface, instructions stored in a memory, to perform the method provided in any one of the foregoing aspects or the implementations of the foregoing aspects.

Optionally, the processor may be a processing circuit or a logic circuit, and the communication interface may be an input or input interface. The processing circuit or the logic circuit is configured to process information, and the input or output interface is configured to receive and send information or data.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

For beneficial effects of any one of the third aspect to the ninth aspect and the implementations of the third aspect to the ninth aspect, refer to beneficial effects of any one of the first aspect and the second aspect and the implementations of the first aspect and the second aspect.

### BRIEF DESCRIPTION OF DRAWINGS

FIG. 1 and FIG. 2 each are a diagram of a network architecture applicable to an embodiment of this application;
FIG. 3A and FIG. 3B are a diagram of resource distribution of multi-base station non-coherent joint transmission on the ground;
FIG. 4A and FIG. 4B are a diagram of resource distribution of multi-satellite non-coherent joint transmission on satellites;
FIG. 5A and FIG. 5B show two types of DMRS patterns;
FIG. 6A to FIG. 6D are a diagram of resource puncturing;
FIG. 7 is a schematic flowchart of a non-terrestrial network communication method according to this application;
FIG. 8A and FIG. 8B are a diagram of resource distribution according to an embodiment of this application; and
FIG. 9 and FIG. 10 each are a diagram of a structure of a communication apparatus according to an embodiment of this application.

### DESCRIPTION OF EMBODIMENTS

The following describes technical solutions of this application with reference to accompanying drawings.

The technical solutions of this application may be applied to a non-terrestrial network (non-terrestrial network, NTN) system like a satellite communication system or a high altitude platform station (high altitude platform station, HAPS) communication system, for example, an integrated communication and navigation (integrated communication and navigation, ICaN) system or a global navigation satellite system (global navigation satellite system, GNSS).

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), or a future mobile communication system.

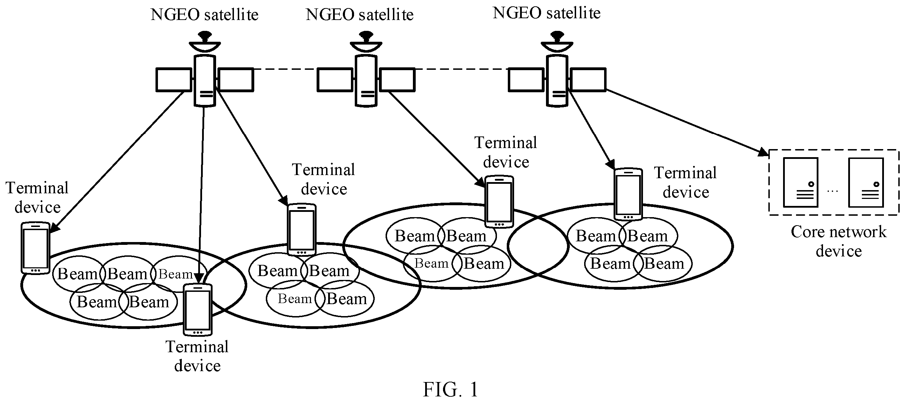

FIG. 1 is a diagram of a network architecture applicable to an embodiment of this application. As shown in FIG. 1, a satellite provides a communication service for a terminal device via a plurality of beams. The satellite in this scenario is a non-geostationary earth orbit (non-geostationary earth orbit, NGEO) satellite, and the satellite is connected to a core network device. The satellite covers a service area via the plurality of beams. Different beams may perform communication through one or more of time division, frequency division, and space division, or different beams may perform communication in different polarization manners (for example, linear polarization, elliptical polarization, left-hand circular polarization, and right-hand circular polarization). The satellite provides a communication service and/or a navigation service for the terminal device via a broadcast communication signal and a navigation signal. Alternatively, the satellite mentioned in embodiments of this application may be a satellite base station or a network side device mounted on a satellite.

It should be understood that alternatively, the satellite in this application may be a central unit (central unit, CU), a distributed unit (distributed unit, DU), or a radio unit (radio unit, RU), or may be an open radio access network (open radio access network, O-RAN) node mounted on a satellite. In an O-RAN system, the CU may also be referred to as an open CU (open CU, O-CU), the DU may also be referred to as an open DU (open DU, O-DU), and the RU may be referred to as an open RU (open RU, O-RU).

The terminal device mentioned in embodiments of this application includes various handheld devices, vehicle-mounted devices, wearable devices, or compute devices that have a wireless communication function, or other processing devices connected to a wireless modem, and may be specifically a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function, another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

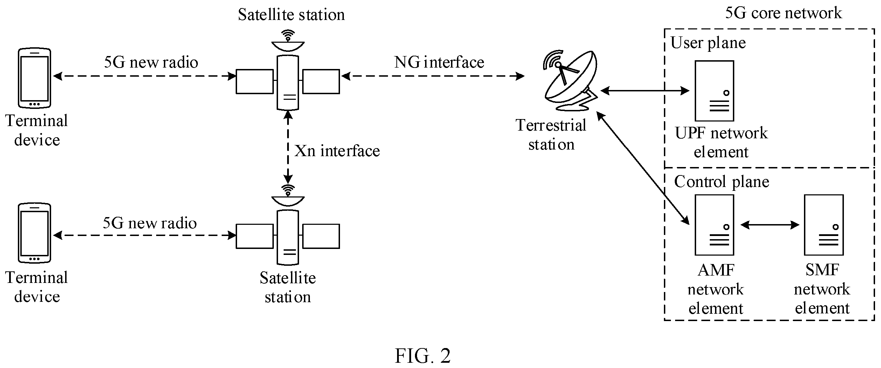

FIG. 2 is a diagram of a network architecture applicable to an embodiment of this application. A 5G network is used as an example. A terrestrial mobile terminal UE accesses a network via a 5G new radio, and a 5G access network device is deployed on a satellite and is connected to a terrestrial core network via a radio link. In addition, there is an inter-satellite link between satellites, to complete signaling exchange and user data transmission between access network devices. Network elements and interfaces of the network elements in FIG. 2 are described as follows.

The UE is a mobile device that supports the 5G new radio, and is typically a mobile device like a smartphone or a pad. The UE may access a satellite network through an air interface and initiate a service like a call or internet access.

The 5G access network device mainly provides a radio access service, schedules a radio resource for an access terminal, provides a reliable wireless transmission protocol, a reliable data encryption protocol, and the like, and is, for example, a base station.

A 5G core network is configured to implement functions such as user access control, mobility management, session management, user security authentication, and charging management. The functions are implemented by the 5G core network through corresponding function units, and the function units may be divided into a control plane function entity and a user plane function entity. For example, an access and mobility management (access and mobility management function, AMF) network element is configured to be responsible for functions such as user access management, security authentication, and mobility management that belong to a control plane, a session management function (session management function, SMF) network element is configured to support a customized mobility management solution together with the AMF network element, and a user plane function (user plane function, UPF) network element is configured to be responsible for managing functions such as user plane data transmission and traffic statistics collection. The function network element may also be referred to as a function entity or a network element.

A terrestrial station is responsible for forwarding signaling and service data between a satellite access network device and the 5G core network.

The 5G new radio is a radio link between the terminal and the access network device.

An Xn interface is an interface between the 5G access network device and another access network device, and is mainly for signaling exchange like handover.

An NG interface is an interface between the 5G access network device and the 5G core network, and is mainly for exchanging signaling of a non-access stratum (non-access stratum, NAS) or the like of the core network and exchanging service data of a user.

To achieve truly seamless global network coverage, constructing an NTN is provided in 5G. In recent years, low earth orbit (low earth orbit, LEO) satellites at a distance of 200 km to 2000 km from the ground have attracted widespread attention. The LEO satellite includes advantages of a small communication delay, a small path loss, and low manufacturing costs, and is considered as one of the key infrastructures for achieving the global network coverage.

With continuous development of satellite communication, a massive LEO constellation is to be constructed in the future, where the LEO constellation includes thousands or even tens of thousands of LEO satellites. In this way, there will be more than one satellite in a visible range of the UE, while improvement in a system capacity through single-satellite transmission is limited. To effectively improve a capacity of an overlapping coverage area of satellites, a satellite system gradually evolves from single-satellite transmission to multi-satellite coordinated transmission. Using multi-satellite coordinated transmission can reduce a requirement for a single-satellite transmission capability, thereby reducing single-satellite manufacturing costs. Multi-satellite coordinated transmission is a key technology in a future satellite communication system.

In a terrestrial cellular mobile communication system, rate performance of a cell edge user can be significantly improved through multi-base station coordination. This technology is also referred to as a coordinated multipoint (coordinated multipoint, CoMP) technology. In the CoMP, a plurality of base stations jointly provide a service for the UE through mutual coordination. The CoMP has a plurality of implementations, including dynamic point selection (dynamic point selection, DPS), coordinated scheduling (coordinated scheduling, CS), coordinated beamforming (coordinated beamforming, CBF), joint transmission (joint transmission, JT), and the like.
(1) The DPS means that different base stations provide a service for a UE by using different time resources, that is, the UE dynamically selects different base stations for communication.
(2) The CS means that different base stations provide a service for a UE by using different frequency resources at same time, that is, the UE communicate with different base stations on different subcarriers. In addition, the CoMP also supports different base stations in providing a service for a UE on a same time-frequency resource.
(3) In the CBF, only one base station of a cell sends a wanted signal to a UE, and a base station of a neighboring coordinated cell adjusts a beamforming vector to reduce interference to the UE.
(4) In the JT, a plurality of base stations are allowed to send wanted signals to a UE. In this case, there are two transmission modes: coherent JT (coherent JT, CJT) and non-coherent JT (non-coherent JT, NCJT). In the CJT, the plurality of base stations send a same wanted signal to the UE. This can achieve the best system performance. However, ideal backhaul is required between the base stations, making system implementation difficult. In the NCJT, the plurality of base stations send different wanted signals to the UE, and non-ideal backhaul may exist between the base stations. This reduces difficulty of system implementation. However, compared with the CJT, this has a specific performance loss.

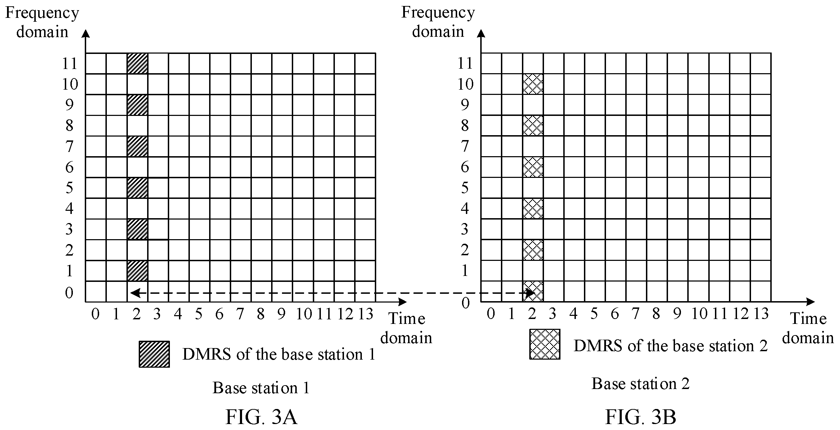

In satellite communication, it is difficult to ensure ideal backhaul between satellites due to a long distance between the satellites. As a result, it is difficult to implement the CJT. Compared with the CJT, the NCJT relaxes a requirement for the ideal backhaul between the satellites, thereby making it easier for actual system implementation. However, multi-satellite NCJT in satellite communication is clearly different from multi-base station NCJT in terrestrial cellular mobile communication. The following briefly describes the NCJT in terrestrial cellular mobile communication and the NCJT in satellite communication with reference to FIG. 3A to FIG. 4B.

It should be noted that in FIG. 3A to FIG. 6D and FIG. 8A and FIG. 8B, each small block represents one resource element (resource element, RE), a time domain width of each RE is one symbol, and a frequency domain width of each RE is one subcarrier. In time domain, one slot (slot) includes 14 symbols, and symbol indexes are from 0 to 13. In frequency domain, one resource block (resource block, RB) includes 12 subcarriers, and subcarrier indexes are from 0 to 11.

FIG. 3A and FIG. 3B are a diagram of resource distribution of multi-base station NCJT on the ground.

In the terrestrial cellular mobile communication system, it is assumed that a base station 1 and a base station 2 provide a service for a specific UE in an NCJT manner, and orthogonal frequency division multiplexing (orthogonal frequency division multiplexing, OFDM) is used as a modulation mode. A DMRS is used as an example. A small block in a shaded part in each of FIG. 3A and FIG. 3B indicates that a signal sent on such an RE is the DMRS. FIG. 3A and FIG. 3B separately show resource distribution of DMRSs of the base station 1 and the base station 2. It can be learned from FIG. 3A and FIG. 3B that, an RE on which the DMRS of the base station 1 is located does not overlap with an RE on which the DMRS of the base station 2 is located. In this way, interference can be reduced.

Specifically, in terrestrial cellular mobile communication, because there is a short distance between the base station and the UE, when signals sent by different base stations arrive at the UE, a delay difference can be covered by a cyclic prefix (cyclic prefix, CP). In addition, only the UE moves at a low speed, and when the signals sent by the different base stations arrive at the UE, a Doppler frequency shift difference can be covered by a subcarrier spacing (subcarrier spacing, SCS). The UE performs OFDM demodulation on the signals from the different base stations, and there is no inter-symbol interference (inter-symbol interference, ISI) and inter-subcarrier interference (inter-carrier interference, ICI). Therefore, a DMRS mapped to one RE by the base station 2 is interfered with only by a signal mapped to one RE by the base station 1. With reference to FIG. 3A and FIG. 3B, the RE on which the DMRS of the base station 1 is located does not overlap with the RE on which the DMRS of the base station 2 is located, so that interference can be reduced.

Both a 5G NR terrestrial network and an NTN use the OFDM as a modulation technology. In satellite communication, because there is a long distance between a satellite and the ground, and the satellite is always in a high-speed moving state, a delay difference of signals sent by different satellites arriving at a UE side may be far greater than the CP, and a Doppler frequency shift difference of the signals sent by the different satellites arriving at the UE side may be on a same order of magnitude as the SCS. As a result, when the signals sent by the different satellites arrive at the UE side, the ISI is generated in time domain, and the ICI is generated in frequency domain. In this case, a DMRS mapped to one RE by a satellite 2 may be interfered with by signals that occupy a plurality of REs and that are of a satellite 1.

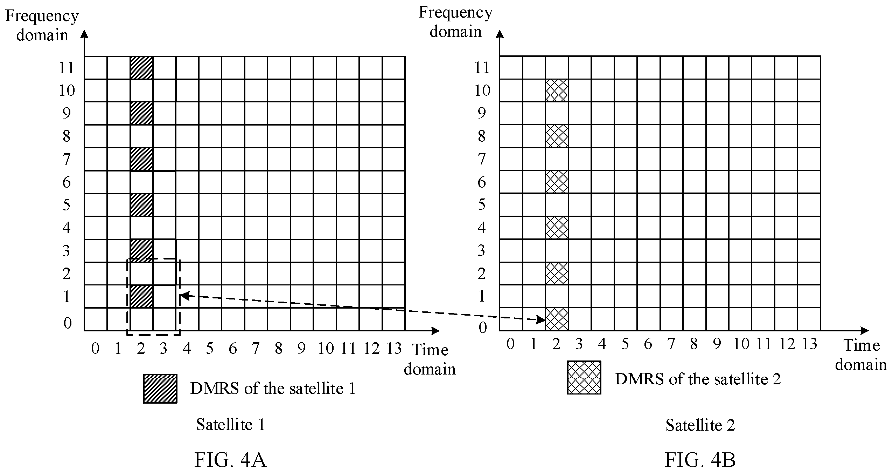

FIG. 4A and FIG. 4B are a diagram of resource distribution of multi-satellite NCJT on satellites. FIG. 4A and FIG. 4B separately show resource distribution of DMRSs of the satellite 1 and the satellite 2.

As shown in FIG. 4A and FIG. 4B, when a delay difference of signals of the satellite 1 and the satellite 2 arriving at the UE is 0.5 symbols, and a frequency shift difference of the signals of the satellite 1 and the satellite 2 arriving at the UE is 0.4 subcarriers, a DMRS mapped to one RE by the satellite 2 may be interfered with by a signal mapped to six REs by the satellite 1. If the DMRS of the satellite 2 is severely interfered with, a large channel estimation error is generated when the UE estimates a channel of the satellite 2. Consequently, performance of a signal detector is severely degraded, causing a sharp decrease in system throughput.

To avoid interference caused by the satellite 1 to the DMRS of the satellite 2, the satellite 1 cannot send the signal on some REs, and a resource on which the signal cannot be sent may be considered as a "punctured" resource on a two-dimensional time-frequency resource plane. The following continues to use the DMRS as an example for description.

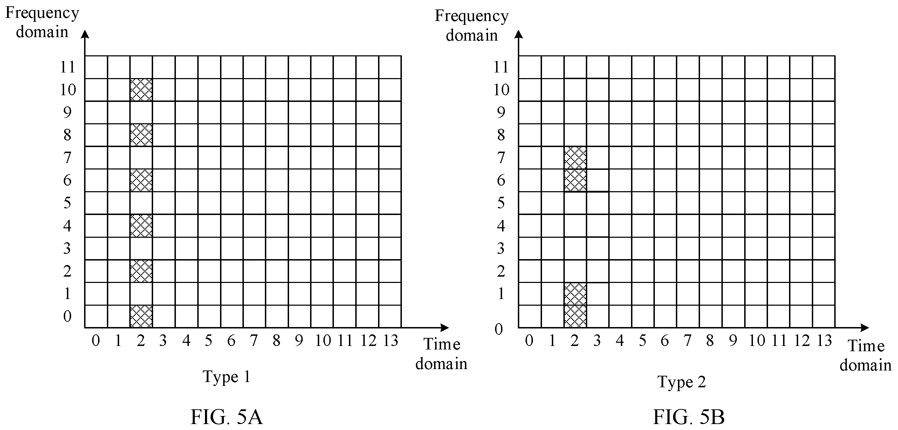

As shown in FIG. 5A and FIG. 5B, two types of DMRS patterns (patterns) are defined in the 3rd generation partnership project (3rd generation partnership project, 3GPP) release (release, R) 15, that is, a type 1 (type 1) and a type 2 (type 2). As shown in FIG. 5A, for a type-1 DMRS, the DMRS appears in units of one subcarrier at an interval of one subcarrier in frequency domain. As shown in FIG. 5B, for a type-2 DMRS, the DMRS appears in units of two subcarriers at an interval of four subcarriers in frequency domain. FIG. 3A to FIG. 4B are both described by using the type-1 DMRS as an example.

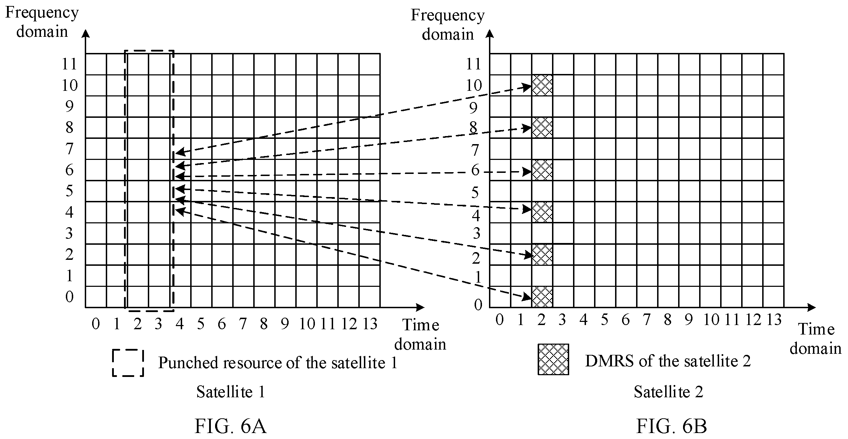

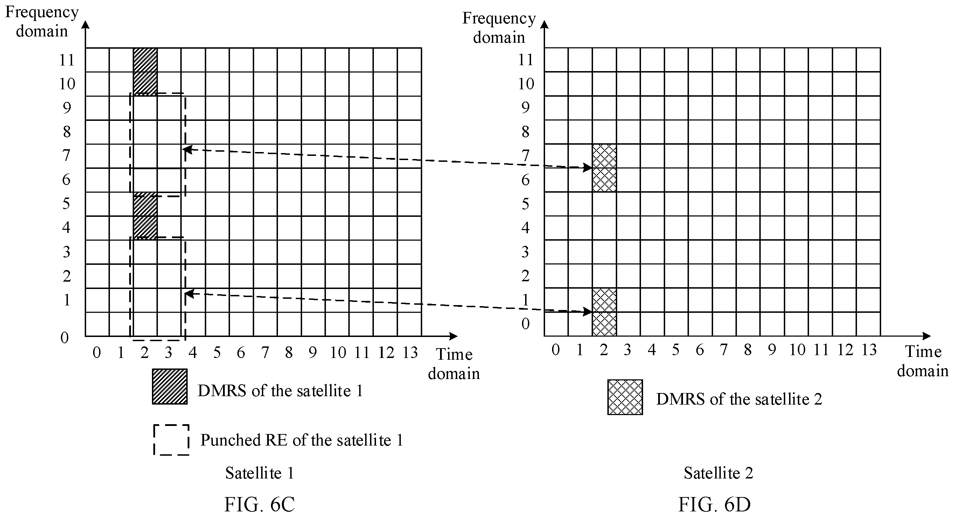

FIG. 6A to FIG. 6D are a diagram of resource puncturing. FIG. 6A and FIG. 6B separately show resource distribution of type-1 DMRSs of the satellite 1 and the satellite 2, and FIG. 6C and FIG. 6D separately show resource distribution of type-2 DMRSs of the satellite 1 and the satellite 2.

As shown in FIG. 6A and FIG. 6B, for the type-1 DMRS, to avoid interference to all DMRSs of the satellite 2 on one RB in a symbol 2, resources that need to be punctured by the satellite 1 are one complete RB in a symbol 2 and one complete RB in a symbol 3. This manner may be considered as resource puncturing at an RB granularity. As shown in FIG. 6C and FIG. 6D, because the type-2 DMRSs are distributed more sparsely in frequency domain, to avoid interference to all DMRSs of the satellite 2 on one RB in a symbol 2, resources that need to be punctured by the satellite 1 are some REs on one RB in a symbol 2 and some REs on one RB in a symbol 3. This manner may be considered as resource puncturing at an RE granularity.

It should be understood that a time-frequency position of the punctured resource is related to the delay difference and the Doppler frequency shift difference. In the example shown in FIG. 6A to FIG. 6D, a delay difference of the signals of the satellite 1 and the satellite 2 arriving at the UE is 0.5 symbols, and a frequency shift difference of the signals of the satellite 1 and the satellite 2 arriving at the UE is 0.5 subcarriers.

In 5G NR, resource puncturing of a physical downlink shared channel (physical downlink shared channel, PDSCH) is implemented by configuring a rate matching resource. Rate matching signaling in radio resource control (radio resource control, RRC) signaling includes RateMatchPattern and RateMatchPatternLTE-CRS. RateMatchPattern can only indicate a time-frequency resource in the PDSCH based on the RB granularity. Specifically, in RateMatchPattern, there are three bitmaps indicating the time-frequency resource, respectively:
(1) ResourceBlocks indicate some RBs on which there are rate matching resources. For example, '0110...00' indicates that there are rate matching resources on a 2^{nd} RB and a 3^{rd} RB.
(2) SymbolsInResourceBlock indicate some symbols that are in one slot and in which there are rate matching resources. For example, '00001111100011' indicates that there are rate matching resources in 5^{th}, 6^{th}, 7^{th}, 8^{th}, 9^{th}, 13^{th}, and 14^{th} symbols in one slot.
(3) PeriodicityAndPattern indicate some slots in which there are rate matching resources. For example, '0010000...000' indicates that there is a rate matching resource in a 3^{rd} slot.

RateMatchPatternLTE-CRS may indicate the time-frequency resource in the PDSCH based on the RE granularity, but the RateMatchPatternLTE-CRS is specially designed for a cell-specific reference signal (cell-specific reference signal, CRS) in LTE. Therefore, the signaling is applicable only to the CRS and is applicable only to a 15 kHz scenario. It should be noted that a position of the CRS on the time-frequency resource is fixed, a position of another reference signal on the time-frequency resource is different from that of the CRS, and positions of another reference signal on time-frequency resources for different terminal devices may be different. Therefore, the existing signaling RateMatchPatternLTE-CRS cannot indicate the rate matching resource at the RE granularity for any reference signal.

In view of this, this application provides an NTN communication method, so that a rate matching resource at an RE granularity can be indicated for any reference signal in satellite communication. This improves resource utilization and provides wider application scenarios.

It should be understood that in embodiments of this application, a time domain symbol may be an OFDM symbol or a discrete Fourier transform-spread-OFDM (Discrete Fourier Transform-spread-OFDM, DFT-s-OFDM) symbol. Unless otherwise specified, all symbols in embodiments of this application are time domain symbols.

It may be understood that in embodiments of this application, a PDSCH, a physical uplink shared channel (physical uplink shared channel, PUSCH), a physical downlink control channel (physical downlink control channel, PDCCH), and a physical uplink control channel (physical uplink control channel, PUCCH) are merely respectively used as examples of a downlink data channel, an uplink data channel, a downlink control channel, and an uplink control channel. In different systems and different scenarios, the data channel and the control channel may have different names. This is not limited in embodiments of this application.

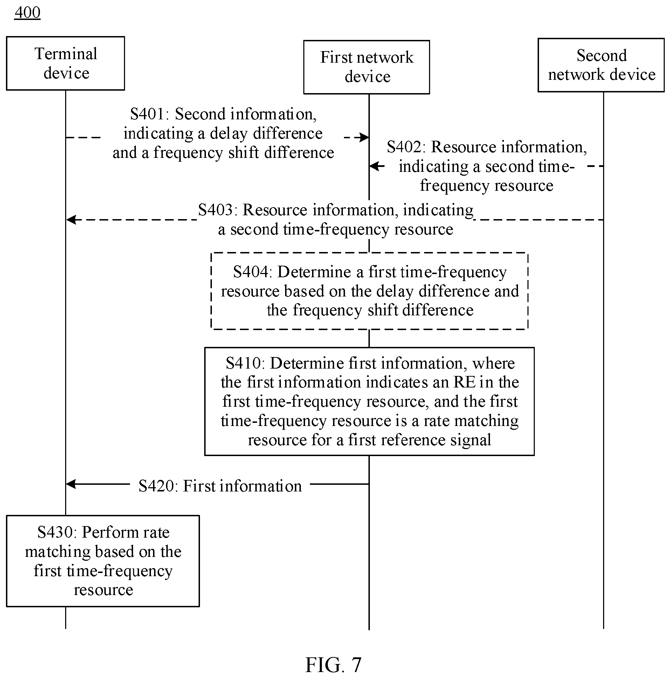

It should be further understood that in the following embodiments, the method is illustrated by using an example in which a terminal device and a network device are used as execution bodies of an interaction illustration. However, this application does not limit the execution bodies of the interaction illustration, provided that communication can be performed according to the method provided in embodiments of this application by running a program of code of the method provided in embodiments of this application. The method provided in embodiments of this application may be performed by a terminal device and a network device, or may be performed by function modules that are in the terminal device and the network device and that can invoke and execute a program. For example, alternatively, a network device in FIG. 7 may be a chip, a chip system, or a processor that supports the method that can be implemented by the network device, or may be a logical module or software that can implement all or some functions of the network device. Alternatively, a terminal device in FIG. 7 may be a chip, a chip system, or a processor that supports the method that can be implemented by the terminal device, or may be a logical module or software that can implement all or some functions of the terminal device.

FIG. 7 is a schematic flowchart of an NTN communication method according to this application. As shown in FIG. 7, the method includes the following steps.

S410: A first network device determines first information, where
the first information indicates an RE in a first time-frequency resource. In other words, a time-frequency resource indicated by the first information is at an RE granularity.

Specifically, the first information may indicate some REs included in the first time-frequency resource.

The first time-frequency resource is a rate matching resource for a first reference signal. The rate matching resource for the first reference signal may be understood that interference to the first reference signal is generated due to transmission of a signal on the first time-frequency resource. The rate matching resource may be replaced with a resource that is not used to transmit a PDSCH.

The first reference signal is a reference signal sent by a second network device to a terminal device.

It should be understood that in this application, the first network device and the second network device provide a service for the terminal device on a same time-frequency resource. In other words, the first network device and the second network device provide a service for the terminal device in an NCJT manner. Both the first network device and the second network device may be satellites.

Optionally, a position of the first reference signal on the time-frequency resource is uncertain. In other words, time-frequency resources used by the second network device to send the first reference signal to the terminal device at different moments may be different.

For example, the first reference signal includes at least one of the following: a DMRS, a CSI-RS, an SRS, a PTRS, a PRS, or a TRS.

It should be understood that the DMRS is mainly used to detect and demodulate data on a data channel (for example, a PDSCH or a PUSCH) or a control channel (for example, a PUCCH or a PDCCH). The CSI-RS is mainly used to measure channel information and report information such as a channel quality indicator (channel quality indicator, CQI), a precoding matrix indicator (precoding matrix indicator, PMI), and a rank indicator (rank indicator, RI). The SRS is mainly used to measure an uplink channel, and may estimate a downlink channel based on the uplink channel, so that a precoding matrix used for downlink transmission can be determined. The PTRS is mainly used for phase noise estimation, the PRS is mainly used for positioning, and the TRS is mainly used for time-frequency synchronization in a high mobility scenario.

Optionally, the position of the first reference signal on the time-frequency resource is fixed. In other words, time-frequency resources used by the second network device to send the first reference signal to the terminal device at different moments may be the same.

For example, the first reference signal is a CRS, and the CRS is mainly used by the terminal device to measure signal quality of a cell, to determine whether to perform cell selection or handover.

In other words, the first reference signal may be any reference signal.

S420: The first network device sends the first information to the terminal device; and correspondingly, the terminal device receives the first information.

For example, the first information may be carried in RRC signaling, and the first information may be referred to as rate matching information. For example, the first reference signal is the DMRS, and the first information may be RateMatchPattern-AsyncDMRS.

S430: The terminal device performs rate matching based on the first time-frequency resource.

Specifically, the terminal device may determine that the first time-frequency resource is a resource not used to transmit a PDSCH.

It should be understood that S430 may be replaced with that the first network device sends the PDSCH to the terminal device; and correspondingly, the terminal device receives the PDSCH, where the first time-frequency resource is not used to transmit the PDCSH. Alternatively, S430 is replaced with that the terminal device performs rate matching around the first time-frequency resource.

According to the foregoing solution, the first network device may indicate the rate matching resource at the RE granularity to the terminal device. Compared with indicating a rate matching resource at an RB granularity, indicating the rate matching resource at the RE granularity can reduce resource waste and improve resource utilization.

In addition, the first reference signal may include a plurality of different reference signals. Therefore, the solution is applicable to the plurality of reference signals, and thus provides wider application scenarios.

In addition, the solution of this application is not limited to a specific reference signal. Therefore, the solution is applicable to a scenario of any SCS, where for example, the SCS is 15 kHz, 30 kHz, 60 kHz, 120 kHz, or 240 kHz, and has a wider application scenario.

The following describes a specific form of the first information.

The first information includes time domain information and frequency domain information, the time domain information indicates a symbol in the first time-frequency resource, and the frequency domain information indicates a subcarrier in the first time-frequency resource.

Optionally, the first information may further include granularity information, and the granularity information indicates a granularity of the first time-frequency resource that is indicated in the first information, where for example, the granularity is the RB or the RE.

In an example 1, the time domain information includes an offset (for example, denoted as StartTimeOffset) between a start symbol in the first time-frequency resource and a start symbol in a second time-frequency resource, and a delta (for example, denoted as AddTimeLength) between a quantity of symbols in the first time-frequency resource and a quantity of symbols in the second time-frequency resource; and the frequency domain information includes an offset (for example, denoted as StartFreqOffset) between a start subcarrier in the first time-frequency resource and a start subcarrier in the second time-frequency resource, and a delta (for example, denoted as AddFreqLength) between a quantity of subcarriers in the first time-frequency resource and a quantity of subcarriers in the second time-frequency resource. The second time-frequency resource is used by the second network device to send the first reference signal to the terminal device. In other words, the second time-frequency resource is a resource used by the second network device to send the first reference signal to the terminal device. Correspondingly, the terminal device receives the first reference signal on the second time-frequency resource.

For example, the first information is:

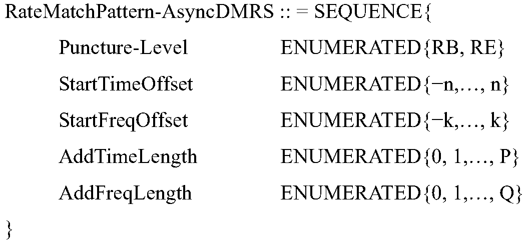

Puncture-Level indicates the granularity information.

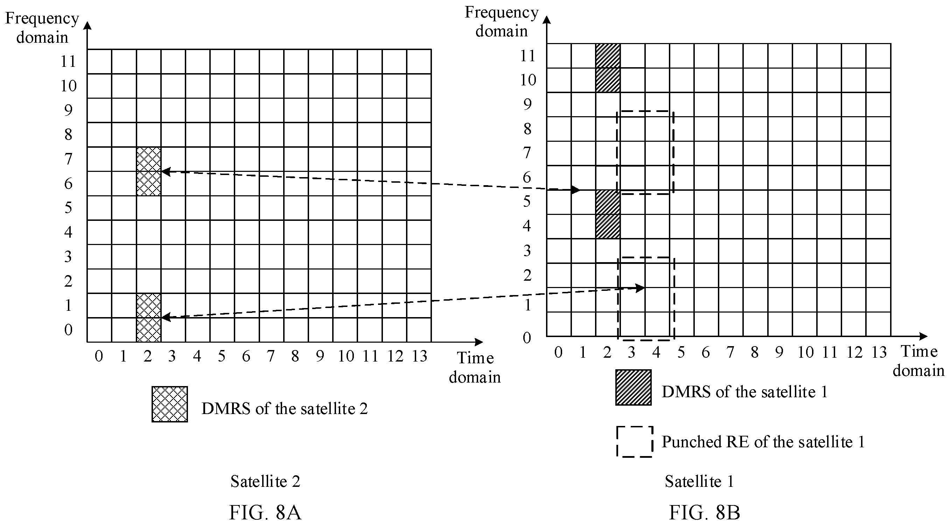

The following provides descriptions with reference to FIG. 8A and FIG. 8B.

As shown in FIG. 8A, a resource (an example of the second time-frequency resource) used by a satellite 2 (an example of the second network device) to transmit a DMRS (the first reference signal) to a UE occupies a 2^{nd} symbol in time domain, and occupies 0^{th}, 1^{st}, 6^{th}, and 7^{th} subcarriers in frequency domain. As shown in FIG. 8B, to avoid interference to the DMRS of the satellite 2, a resource (the rate matching resource, that is, an example of the first time-frequency resource) that needs to be punctured by a satellite 1 (an example of the first network device) occupies 3^{rd} and 4^{th} symbols in time domain, and occupies 0^{th}, 1^{st}, 2^{nd}, 6^{th}, 7^{th}, and 8^{th} subcarriers in frequency domain. In the example 1, the satellite 1 may indicate the following information (that is, an example of the first information) to the UE:
StartTimeOffset = 1,
StartFreqOffset = 0,
AddTimeLength = 1,
AddFreqLength = 1.

In an example 2, the time domain information includes an offset (for example, denoted as StartTimeOffset) between a start symbol in the first time-frequency resource and a start symbol in a second time-frequency resource, and an offset (for example, denoted as EndTimeOffset) between an end symbol in the first time-frequency resource and an end symbol in the second time-frequency resource; and the frequency domain information includes an offset (for example, denoted as StartFreqOffset) between a start subcarrier in the first time-frequency resource and a start subcarrier in the second time-frequency resource, and an offset (for example, denoted as EndFreqOffset) between an end subcarrier in the first time-frequency resource and an end subcarrier in the second time-frequency resource.

For example, the first information is:

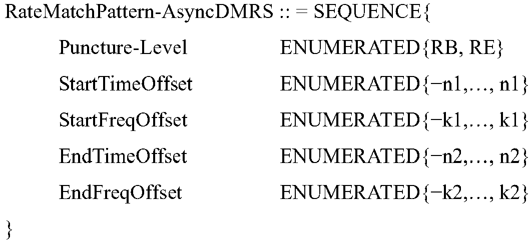

The case shown in FIG. 8A and FIG. 8B continues to be used as an example for description. In the example 2, the satellite 1 may indicate the following information (that is, an example of the first information) to the UE:
StartTimeOffset = 1,
StartFreqOffset = 0,
EndTimeOffset = 2,
EndFreqOffset = 1.

According to the foregoing solution, the first network device may indicate, to the terminal device, a relative position between the rate matching resource and the time-frequency resource of the first reference signal. In this way, little information can be used to indicate the rate matching resource, thereby reducing signaling overheads.

It should be understood that in this application, the offset may be a positive value or a negative value. The positive value may indicate a larger symbol or subcarrier index, and the negative value may indicate a smaller symbol or subcarrier index. For example, when the offset between the start symbol in the first time-frequency resource and the start symbol in the second time-frequency resource is a positive value, it indicates that an index of the start symbol in the first time-frequency resource is greater than an index of the start symbol in the second time-frequency resource. For another example, when the offset between the end subcarrier in the first time-frequency resource and the end subcarrier in the second time-frequency resource is a negative value, it indicates that an index of the end subcarrier in the first time-frequency resource is less than an index of the end subcarrier in the second time-frequency resource.

In an example 3, the time domain information includes a first bitmap (for example, denoted as symbolsPerSlot), where the first bitmap indicates the symbol in the first time-frequency resource; and the frequency domain information includes a second bitmap (for example, denoted as resourceElementsPerRB), where the second bitmap indicates the subcarrier in the first time-frequency resource.

For example, a length of the first bitmap may be a quantity of symbols in one slot, where for example, the quantity of symbols is 14, and a length of the second bitmap may be a quantity of subcarriers in one RB, where for example, the quantity of subcarriers is 12. 1 in the first bitmap indicates that such a symbol belongs to the rate matching resource, and 0 in the first bitmap indicates that the symbol does not belong to the rate matching resource. 1 in the second bitmap indicates that such a subcarrier belongs to the rate matching resource, and 0 in the second bitmap indicates that the subcarrier does not belong to the rate matching resource.

For example, the first information is:

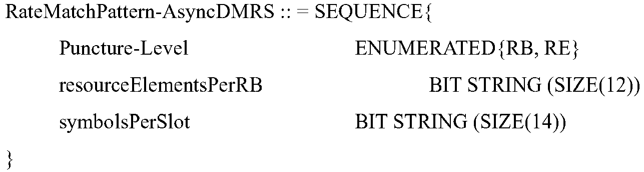

The case shown in FIG. 8A and FIG. 8B continues to be used as an example for description. In the example 2, the satellite 1 may indicate the following information (that is, an example of the first information) to the UE:
symbolsPerSlot = '00011000000000',
resourceElementsPerRB = '111000111000'.

It should be understood that indication manners in the foregoing examples may be combined with each other.

It should be further understood that in this application, an example in which one RE includes one symbol in time domain and includes one subcarrier in frequency domain is used for description. However, this application is not limited thereto, and one RE may also be expressed in another manner.

According to the foregoing solution, the first network device may indicate the rate matching resource to the terminal device in a form of the bitmap. In this way, the terminal device can directly learn of a position of the rate matching resource, and this is simpler and more intuitive.

Optionally, the method 400 further includes S401: The terminal device sends second information to the first network device; and correspondingly, the first network device receives the second information.

The second information is for determining a delay difference and a frequency shift difference between the first network device and the second network device. The delay difference refers to an interval between time at which a signal of the first network device arrives at the terminal device and time at which a signal of the second network device arrives at the terminal device. The frequency shift difference refers to an interval between a frequency at which the signal of the first network device arrives at the terminal device and a frequency at which the signal of the second network device arrives at the terminal device.

Specifically, the second information includes any one of the following: the delay difference and the frequency shift difference; a position of the terminal device; or a motion trajectory of the terminal device. The motion trajectory may include a plurality of positions.

For example, the terminal device is a mobile phone or a vehicle, and may determine the motion trajectory based on a navigation route set by a user.

In an implementation, the terminal device may determine the delay difference and the frequency shift difference. For example, the terminal device may measure a synchronization signal block (synchronization signal block, SSB) from the first network device and an SSB from the second network device, to obtain the delay difference and the frequency shift difference. Further, the terminal device reports the delay difference and the frequency shift difference to the first network device. In this case, the second information is the delay difference and the frequency shift difference.

In another implementation, the delay difference and the frequency shift difference may be determined by the first network device. For example, the terminal device reports the position or the motion trajectory of the terminal device to the first network device, and the first network device determines the delay difference and the frequency shift difference based on the position or the motion trajectory of the terminal device.

For example, the second information may be carried on a PUCCH or a PUSCH.

It should be understood that the delay difference may be a positive value or a negative value. The positive value may indicate that the time at which the signal of the first network device arrives at the terminal device is later than the time at which the signal of the second network device arrives at the terminal device, and the negative value may indicate that the time at which the signal of the first network device arrives at the terminal device is earlier than the time at which the signal of the second network device arrives at the terminal device.

Similarly, the frequency shift difference may be a positive value or a negative value. The positive value may indicate that the frequency at which the signal of the first network device arrives at the terminal device is greater than the frequency at which the signal of the second network device arrives at the terminal device, and the negative value may indicate that the frequency at which the signal of the first network device arrives at the terminal device is less than the frequency at which the signal of the second network device arrives at the terminal device.

According to the foregoing solution, the terminal device may indicate the delay difference and the frequency shift difference between the first network device and the second network device, so that the network device determines an appropriate rate matching resource, thereby reducing interference and improving communication efficiency.

Optionally, the method 400 further includes S402: The second network device sends resource information to the first network device, where the resource information indicates the second time-frequency resource.

For example, the resource information may include a type of the first reference signal and information about the time-frequency resource occupied by the first reference signal.

For example, the first reference signal is the DMRS, and the resource information sent by the second network device to the first network device may include the following signaling: MIB.dmrs-TypeA-Position, PDSCH-TimeDomainResourceAllocation, and DMRS-DownlinkConfig, which respectively indicate a time-frequency resource position, a time domain resource start position, and a frequency domain resource position of the DMRS.

Optionally, the method 400 further includes S403: The second network device sends resource information to the terminal device, where the resource information indicates the second time-frequency resource.

For example, the resource information may include a type of the first reference signal and information about the time-frequency resource occupied by the first reference signal.

For example, the first reference signal is the DMRS, and the resource information sent by the second network device to the terminal device may include the following signaling: MIB.dmrs-TypeA-Position, PDSCH-TimeDomainResourceAllocation, and DMRS-DownlinkConfig, which respectively indicate a time-frequency resource position, a time domain resource start position, and a frequency domain resource position of the DMRS.

Optionally, S430 specifically includes: The terminal device determines the first time-frequency resource based on the second time-frequency resource and the first information.

It should be understood that specific manners in which the second network device may indicate the second time-frequency resource to the terminal device and the first network device may be the same or different. This is not limited. In addition, time at which the second network device sends the resource information to the terminal device and the first network device may be the same or different. This is not limited.

Optionally, if the first information is in a form of the example 3, S403 may not be performed.

According to the foregoing solution, the second network device may indicate, to the terminal device and the first network device, the resource occupied by the first reference signal that is sent by the second network device, so that the terminal device and the first network device determine the rate matching resource, thereby reducing interference and improving communication efficiency.

Optionally, the method 400 further includes S404: The first network device determines the first time-frequency resource based on the delay difference and the frequency shift difference.

S404 may specifically include: The first network device determines the first time-frequency resource based on the delay difference, the frequency shift difference, and the second time-frequency resource.

For example, in the example shown in FIG. 8A and FIG. 8B, a delay difference is 1.5 symbols. Therefore, the satellite 1 determines that the rate matching resource is located in one symbol after the DMRS resource of the satellite 2, and the rate matching resource occupies two symbols in total. A frequency shift difference is 0.4 subcarriers. Therefore, the satellite 1 determines that the rate matching resource is the same as a start subcarrier of the DMRS resource of the satellite 2, and the rate matching resource occupies three subcarriers each time.

In an implementation, the resource information is in resource set information sent by the second network device, where the resource set information indicates a time-frequency resource occupied by the first reference signal in a first time period, the first time period includes N time periods, and the second time-frequency resource is a time-frequency resource occupied by the first reference signal in one of the N time periods.

Correspondingly, in S410, that the first network device determines the first information means that the first network device determines N pieces of first information, and the N time periods are in one-to-one correspondence with the N pieces of first information. In S420, that the first network device sends the first information to the terminal device means that the first network device sends the N pieces of first information to the terminal device. In S430, that the terminal device performs rate matching based on the first time-frequency resource means that in the N time periods, the terminal device performs rate matching based on a first time-frequency resource corresponding to each time period.

For example, the N pieces of first information may be referred to as a rate matching resource list. For example, the first reference signal is the DMRS, and the rate matching resource list is shown in Table 1.

**Table 1**

| Time period | First information |
|---|---|
| [*t*₁, *t*₂] | RateMatchPattern-AsyncDMRS-1 |
| [*t*₂, *t*₃] | RateMatchPattern-AsyncDMRS-2 |
| ... | ... |
| [*t_{N}*, *t*_{*N*+1}] | RateMatchPattern-AsyncDMRS-(*N*) |

Optionally, the second information may be N positions corresponding to the N time periods, or may be a motion trajectory in the first time period.

According to the foregoing solution, the first network device may configure rate matching resources in the N time periods for the terminal device. In this way, frequent configuration can be avoided, and signaling overheads of communication can be reduced.

Optionally, the method further includes: The first network device sends third information to the terminal device, where the third information indicates a slot and an RB in the first time-frequency resource. In other words, the third information may indicate some slots and some RBs in which the first time-frequency resource is located.

It should be understood that the third information and the first information may be simultaneously sent, or may be separately sent.

For example, the first reference signal is the DMRS, the third information and the first information may be separately sent, and the third information is located in media access control control element (media access control control element, MAC-CE) or downlink control information (downlink control information, DCI) signaling. The signaling may indicate a slot and an RB in which a PDSCH resource is located. A rate matching resource for the DMRS and the PDSCH resource are in a same RB and slot.

For example, the first reference signal is the CSI-RS, and both the third information and the first information may be located in RRC signaling and simultaneously sent.

It may be understood that to implement functions in the foregoing embodiments, the base station and the terminal include corresponding hardware structures and/or software modules for performing the functions. A person skilled in the art should be easily aware that, in this application, the units and method steps in the examples described with reference to the embodiments disclosed in this application can be implemented by hardware or a combination of hardware and computer software. Whether a function is performed by hardware or hardware driven by computer software depends on particular application scenarios and design constraints of the technical solutions.

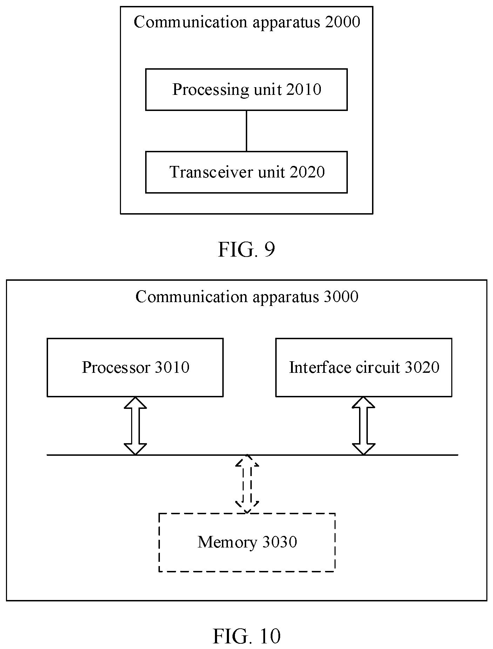

FIG. 9 and FIG. 10 each are a diagram of a structure of a communication apparatus according to an embodiment of this application. These communication apparatuses may be configured to implement a function of the terminal or the base station in the foregoing method embodiments, and therefore can also achieve beneficial effects of the foregoing method embodiments. In embodiments of this application, the communication apparatus may be the terminal device shown in FIG. 1 or FIG. 2, may be the satellite shown in FIG. 1 or FIG. 2, or may be a module (for example, a chip) used in the terminal device or the satellite.

As shown in FIG. 9, a communication apparatus 2000 includes a processing unit 2010 and a transceiver unit 2020. The communication apparatus 2000 is configured to implement a function of the terminal device or the network device in the method 400 shown in FIG. 7.

For example, the communication apparatus 2000 is configured to implement the function of the terminal device in the method 400 shown in FIG. 7. Specifically, the transceiver unit 2020 is configured to receive first information from a first network device, where the first information indicates an RE in a first time-frequency resource, the first time-frequency resource is a rate matching resource for a first reference signal, and the first reference signal includes at least one of the following: a DMRS, a CSI-RS, an SRS, a PTRS, a PRS, a TRS, or a CRS; and the processing unit 2010 is configured to perform rate matching based on the first time-frequency resource.

It should be understood that the transceiver unit 2010 and the processing unit 2020 may further perform other operations performed by the terminal device in the method 400. Details are not described herein again.

For another example, the communication apparatus 2000 is configured to implement the function of the first network device in the method 400 shown in FIG. 7. Specifically, the processing unit 2010 is configured to determine first information, where the first information indicates an RE in a first time-frequency resource, the first time-frequency resource is a rate matching resource for a first reference signal, and the first reference signal includes at least one of the following: a DMRS, a CSI-RS, an SRS, a PTRS, a PRS, a TRS, or a CRS; and the transceiver unit 2020 is configured to send the first information to a terminal device.

It should be understood that the transceiver unit 2010 and the processing unit 2020 may further perform other operations performed by the first terminal device in the method 400. Details are not described herein again.

As shown in FIG. 10, a communication apparatus 3000 includes a processor 3010 and an interface circuit 3020. The processor 3010 and the interface circuit 3020 are coupled to each other. It may be understood that the interface circuit 3020 may be a transceiver or an input/output interface. Optionally, the communication apparatus 3000 may further include a memory 3030 configured to: store instructions executed by the processor 3010, store input data required by the processor 3010 to run the instructions, or store data generated after the processor 3010 runs the instructions. Sometimes, the interface circuit 3020 may also be understood as a part of the processor 3010. In this case, the communication apparatus 3000 includes the processor 3010.

When the communication apparatus 3000 is configured to implement the method 400 shown in FIG. 7, the processor 3010 is configured to implement a function of the foregoing processing unit 2010, and the interface circuit 3020 is configured to implement a function of the foregoing transceiver unit 2020.

When the communication apparatus is a chip used in a terminal device (referred to as a terminal chip for short), the terminal chip implements a function of the terminal device in the foregoing method embodiments. That the terminal chip receives information from a first network device may be understood that the information is first received by another module (for example, a radio frequency module or an antenna) in the terminal device, and then sent by the module to the terminal chip. That the terminal chip sends information to a first network device may be understood that the information is first sent to another module (for example, a radio frequency module or an antenna) in the terminal device, and then sent to the first network device by the module.

When the communication apparatus is a chip used in a first network device (referred to as a network chip for short), the network chip implements a function of the first network device in the foregoing method embodiments. That the network chip receives information from a terminal device may be understood that the information is first received by another module (for example, a radio frequency module or an antenna) in the first network device, and then sent by the module to the network chip. That the network chip sends information to a terminal device may be understood that the information is first sent to another module (for example, a radio frequency module or an antenna) in the first network device, and then sent by the module to the terminal device.

In this application, that a device A sends information to a device B may be that A directly sends the information to B, or may be that A indirectly sends the information to B via another device. Similarly, that the device B receives information from the device A may be that the device B directly receives the information sent by the device A, or may be that the device B indirectly receives, via another device, the information sent by the device A. The device A and the device B herein may be network devices or terminal devices, or may be modules in the network device or the terminal device. Information sending and receiving may be information exchange between a network device and a terminal device, for example, information exchange between a satellite and a UE; information sending and receiving may be information exchange between two network devices, for example, information exchange between a CU and a DU; or information sending and receiving may be information exchange between different modules in an apparatus, for example, information exchange between a chip in a terminal device and another module in the terminal device, or information exchange between a chip in a network device and another module in the network device.

It may be understood that the processor in embodiments of this application may be a central processing unit (Central Processing Unit, CPU), another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that can be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Alternatively, the storage medium may be a component of the processor. The processor and the storage medium may be located in an ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, all or some procedures or functions according to embodiments of this application are performed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, a computer, a server, or a data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. "Including at least one of A, B, and C" may indicate: including A; including B; including C; including A and B; including A and C; including B and C; or including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A non-terrestrial network communication method, comprising:
receiving first information from a first network device, wherein the first information indicates a resource element RE in a first time-frequency resource, the first time-frequency resource is a rate matching resource for a first reference signal, and the first reference signal comprises at least one of the following: a demodulation reference signal, a channel state information reference signal, a sounding reference signal, a phase tracking reference signal, a positioning reference signal, or a tracking reference signal; and
performing rate matching based on the first time-frequency resource.

2. The method according to claim 1, wherein the method further comprises:
sending second information to the first network device, wherein the second information is for determining a delay difference and a frequency shift difference between the first network device and a second network device, and the delay difference and the frequency shift difference are for determining the first time-frequency resource.

3. The method according to claim 2, wherein the second information comprises any one of the following:
the delay difference and the frequency shift difference;
a position of a terminal device; or
a motion trajectory of a terminal device.

4. The method according to any one of claims 1 to 3, wherein the first information comprises time domain information and frequency domain information, the time domain information indicates a symbol in the first time-frequency resource, and the frequency domain information indicates a subcarrier in the first time-frequency resource.

5. The method according to claim 4, wherein the time domain information comprises:
an offset between a start symbol in the first time-frequency resource and a start symbol in a second time-frequency resource, and a delta between a quantity of symbols in the first time-frequency resource and a quantity of symbols in the second time-frequency resource;
an offset between a start symbol in the first time-frequency resource and a start symbol in a second time-frequency resource, and an offset between an end symbol in the first time-frequency resource and an end symbol in the second time-frequency resource; or
a first bitmap, wherein the first bitmap indicates the symbol in the first time-frequency resource, wherein
the second time-frequency resource is used to receive the first reference signal from the second network device.

6. The method according to claim 4 or 5, wherein the frequency domain information comprises:
an offset between a start subcarrier in the first time-frequency resource and a start subcarrier in the second time-frequency resource, and a delta between a quantity of subcarriers in the first time-frequency resource and a quantity of subcarriers in the second time-frequency resource;
an offset between a start subcarrier in the first time-frequency resource and a start subcarrier in the second time-frequency resource, and an offset between an end subcarrier in the first time-frequency resource and an end subcarrier in the second time-frequency resource; or
a second bitmap, wherein the second bitmap indicates the subcarrier in the first time-frequency resource, wherein
the second time-frequency resource is used to receive the first reference signal from the second network device.

7. The method according to claim 5 or 6, wherein the method further comprises:
receiving resource information from the second network device, wherein the resource information indicates the second time-frequency resource; and
determining the first time-frequency resource based on the second time-frequency resource and the first information.

8. The method according to claim 7, wherein receiving the resource information from the second network device comprises:
receiving resource set information from the second network device, wherein the resource set information indicates a time-frequency resource occupied by the first reference signal in a first time period, and the resource set information comprises the resource information, wherein
the first time period comprises N time periods, and the N time periods are in one-to-one correspondence with N pieces of first information.

9. A non-terrestrial network communication method, comprising:
determining first information, wherein the first information indicates an RE in a first time-frequency resource, the first time-frequency resource is a rate matching resource for a first reference signal, and the first reference signal comprises at least one of the following: a demodulation reference signal, a channel state information reference signal, a sounding reference signal, a phase tracking reference signal, a positioning reference signal, or a tracking reference signal; and
sending the first information to a terminal device.

10. The method according to claim 9, wherein the method further comprises:
receiving second information from the terminal device, wherein the second information is for determining a delay difference and a frequency shift difference between the first network device and a second network device; and
determining the first time-frequency resource based on the delay difference and the frequency shift difference.

11. The method according to claim 10, wherein the second information comprises any one of the following:
the delay difference and the frequency shift difference;
a position of the terminal device; or
a motion trajectory of the terminal device.

12. The method according to any one of claims 9 to 11, wherein the first information comprises time domain information and frequency domain information, the time domain information indicates a symbol in the first time-frequency resource, and the frequency domain information indicates a subcarrier in the first time-frequency resource.

13. The method according to claim 12, wherein the time domain information comprises:
an offset between a start symbol in the first time-frequency resource and a start symbol in a second time-frequency resource, and a delta between a quantity of symbols in the first time-frequency resource and a quantity of symbols in the second time-frequency resource;
an offset between a start symbol in the first time-frequency resource and a start symbol in a second time-frequency resource, and an offset between an end symbol in the first time-frequency resource and an end symbol in the second time-frequency resource; or
a first bitmap, wherein the first bitmap indicates the symbol in the first time-frequency resource, wherein
the second time-frequency resource is used by the second network device to send the first reference signal to the terminal device.

14. The method according to claim 12 or 13, wherein the frequency domain information comprises:
an offset between a start subcarrier in the first time-frequency resource and a start subcarrier in the second time-frequency resource, and a delta between a quantity of subcarriers in the first time-frequency resource and a quantity of subcarriers in the second time-frequency resource;
an offset between a start subcarrier in the first time-frequency resource and a start subcarrier in the second time-frequency resource, and an offset between an end subcarrier in the first time-frequency resource and an end subcarrier in the second time-frequency resource; or
a second bitmap, wherein the second bitmap indicates the subcarrier in the first time-frequency resource, wherein
the second time-frequency resource is used by the second network device to send the first reference signal to the terminal device.

15. The method according to claim 13 or 14, wherein the method further comprises:
receiving resource information from the second network device, wherein the resource information indicates the second time-frequency resource; and
determining the first time-frequency resource based on the second time-frequency resource.

16. The method according to claim 15, wherein receiving the resource information from the second network device comprises:
receiving resource set information from the second network device, wherein the resource set information indicates a time-frequency resource occupied by the first reference signal in a first time period, and the resource set information comprises the resource information, wherein
the first time period comprises N time periods, and the N time periods are in one-to-one correspondence with N pieces of first information.

17. A communication apparatus, comprising:
a transceiver unit, configured to receive first information from a first network device, wherein the first information indicates an RE in a first time-frequency resource, the first time-frequency resource is a rate matching resource for a first reference signal, and the first reference signal comprises at least one of the following: a demodulation reference signal, a channel state information reference signal, a sounding reference signal, a phase tracking reference signal, a positioning reference signal, or a tracking reference signal; and
a processing unit, configured to perform rate matching based on the first time-frequency resource.

18. The apparatus according to claim 17, wherein the transceiver unit is further configured to:
send second information to the first network device, wherein the second information is for determining a delay difference and a frequency shift difference between the first network device and a second network device, and the delay difference and the frequency shift difference are for determining the first time-frequency resource.

19. The apparatus according to claim 18, wherein the second information comprises any one of the following:
the delay difference and the frequency shift difference;
a position of a terminal device; or
a motion trajectory of a terminal device.

20. The apparatus according to any one of claims 17 to 19, wherein the first information comprises time domain information and frequency domain information, the time domain information indicates a symbol in the first time-frequency resource, and the frequency domain information indicates a subcarrier in the first time-frequency resource.

21. The apparatus according to claim 20, wherein the time domain information comprises:
an offset between a start symbol in the first time-frequency resource and a start symbol in a second time-frequency resource, and a delta between a quantity of symbols in the first time-frequency resource and a quantity of symbols in the second time-frequency resource;
an offset between a start symbol in the first time-frequency resource and a start symbol in a second time-frequency resource, and an offset between an end symbol in the first time-frequency resource and an end symbol in the second time-frequency resource; or
a first bitmap, wherein the first bitmap indicates the symbol in the first time-frequency resource, wherein
the second time-frequency resource is used to receive the first reference signal from the second network device.

22. The apparatus according to claim 20 or 21, wherein the frequency domain information comprises:
an offset between a start subcarrier in the first time-frequency resource and a start subcarrier in the second time-frequency resource, and a delta between a quantity of subcarriers in the first time-frequency resource and a quantity of subcarriers in the second time-frequency resource;
an offset between a start subcarrier in the first time-frequency resource and a start subcarrier in the second time-frequency resource, and an offset between an end subcarrier in the first time-frequency resource and an end subcarrier in the second time-frequency resource; or
a second bitmap, wherein the second bitmap indicates the subcarrier in the first time-frequency resource, wherein
the second time-frequency resource is used to receive the first reference signal from the second network device.

23. The apparatus according to claim 21 or 22, wherein
the transceiver unit is further configured to receive resource information from the second network device, wherein the resource information indicates the second time-frequency resource; and
the processing unit is further configured to determine the first time-frequency resource based on the second time-frequency resource and the first information.

24. The apparatus according to claim 23, wherein the processing unit is specifically configured to:
receive resource set information from the second network device, wherein the resource set information indicates a time-frequency resource occupied by the first reference signal in a first time period, and the resource set information comprises the resource information, wherein
the first time period comprises N time periods, and the N time periods are in one-to-one correspondence with N pieces of first information.

25. A communication apparatus, comprising:
a processing unit, configured to determine first information, wherein the first information indicates an RE in a first time-frequency resource, the first time-frequency resource is a rate matching resource for a first reference signal, and the first reference signal comprises at least one of the following: a demodulation reference signal, a channel state information reference signal, a sounding reference signal, a phase tracking reference signal, a positioning reference signal, or a tracking reference signal; and
a transceiver unit, configured to send the first information to a terminal device.

26. The apparatus according to claim 25, wherein
the transceiver unit is further configured to receive second information from the terminal device, wherein the second information is for determining a delay difference and a frequency shift difference between the first network device and a second network device; and
the processing unit is further configured to determine the first time-frequency resource based on the delay difference and the frequency shift difference.

27. The apparatus according to claim 26, wherein the second information comprises any one of the following:
the delay difference and the frequency shift difference;
a position of the terminal device; or
a motion trajectory of the terminal device.

28. The apparatus according to any one of claims 25 to 27, wherein the first information comprises time domain information and frequency domain information, the time domain information indicates a symbol in the first time-frequency resource, and the frequency domain information indicates a subcarrier in the first time-frequency resource.

29. The apparatus according to claim 28, wherein the time domain information comprises:
an offset between a start symbol in the first time-frequency resource and a start symbol in a second time-frequency resource, and a delta between a quantity of symbols in the first time-frequency resource and a quantity of symbols in the second time-frequency resource;
an offset between a start symbol in the first time-frequency resource and a start symbol in a second time-frequency resource, and an offset between an end symbol in the first time-frequency resource and an end symbol in the second time-frequency resource; or
a first bitmap, wherein the first bitmap indicates the symbol in the first time-frequency resource, wherein
the second time-frequency resource is used by the second network device to send the first reference signal to the terminal device.

30. The apparatus according to claim 28 or 29, wherein the frequency domain information comprises:
an offset between a start subcarrier in the first time-frequency resource and a start subcarrier in the second time-frequency resource, and a delta between a quantity of subcarriers in the first time-frequency resource and a quantity of subcarriers in the second time-frequency resource;
an offset between a start subcarrier in the first time-frequency resource and a start subcarrier in the second time-frequency resource, and an offset between an end subcarrier in the first time-frequency resource and an end subcarrier in the second time-frequency resource; or
a second bitmap, wherein the second bitmap indicates the subcarrier in the first time-frequency resource, wherein
the second time-frequency resource is used by the second network device to send the first reference signal to the terminal device.

31. The apparatus according to claim 29 or 30, wherein
the transceiver unit is further configured to receive resource information from the second network device, wherein the resource information indicates the second time-frequency resource; and
the processing unit is further configured to determine the first time-frequency resource based on the second time-frequency resource.

32. The apparatus according to claim 31, wherein the processing unit is specifically configured to:
receive resource set information from the second network device, wherein the resource set information indicates a time-frequency resource occupied by the first reference signal in a first time period, and the resource set information comprises the resource information, wherein
the first time period comprises N time periods, and the N time periods are in one-to-one correspondence with N pieces of first information.

33. A communication apparatus, comprising one or more processors, wherein the one or more processors are configured to execute a computer program or instructions stored in a memory, so that the apparatus performs the method according to any one of claims 1 to 8, or performs the method according to any one of claims 9 to 16.

34. A computer-readable storage medium, wherein the computer-readable storage medium stores a computer program or instructions; and when the computer program or the instructions are run, the method according to any one of claims 1 to 8 is performed, or the method according to any one of claims 9 to 16 is performed.

35. A computer program product, comprising instructions, wherein when the instructions are run, the method according to any one of claims 1 to 8 is performed, or the method according to any one of claims 9 to 16 is performed.

36. A chip or a chip system, comprising a processor, wherein the processor is coupled to a memory, the memory is configured to store a computer program, and the processor is configured to execute the computer program stored in the memory, to implement the method according to any one of claims 1 to 8, or implement the method according to any one of claims 9 to 16.
